# EUROPEAN PATENT APPLICATION

(11) **EP 1 708 182 A2**
(43) Date of publication of application: **04.10.2006**
(21) Application number: 06250996.3
(22) Date of filing: 24.02.2006
(51) Int. Cl.: G11B 7/0065

(54) **Hologram recorder**

(30) Priority: 30.03.2005 JP 2005098124
(71) Applicant: Fujitsu Ltd., Kawasaki-shi, Kanagawa 211-8588 (JP)
(72) Inventor: Yoshikawa, Hiroyasu c/o Fujitsu Limited, Kawasaki-shi Kanagawa 211-8588 (JP); Tezuka, Kouichi c/o Fujitsu Limited, Kawasaki-shi Kanagawa 211-8588 (JP); Uno, Kazushi c/o Fujitsu Limited, Kawasaki-shi Kanagawa 211-8588 (JP)
(74) Representative: Fenlon, Christine Lesley

(57) **Abstract**

A hologram recorder (A) is provided for recording a hologram on a hologram recording medium (B) by interference of a recording beam with a reference beam. The recorder includes a light source (1) for outputting coherent light to be split into the recording beam (S) and the reference beam (R) ; a spatial light modulator (5) for modulating the recording beam (S) into a form representing information to be recorded; an objective lens (7) for outputting the recording beam (S) ; and a phase shift mask (5A) provided at a light entering surface of the spatial light modulator (5A). The mask (5A) is configured to allow the recording beam (S) to pass through, and also to partially shift the phase of the recording beam (S) passing through the mask (5A).

## Description

### BACKGROUND OF THE INVENTION

### 1. Field of the Invention:

The present invention relates to hologram recorders for recording holograms in a hologram recording medium.

### 2. Description of the Related Art:

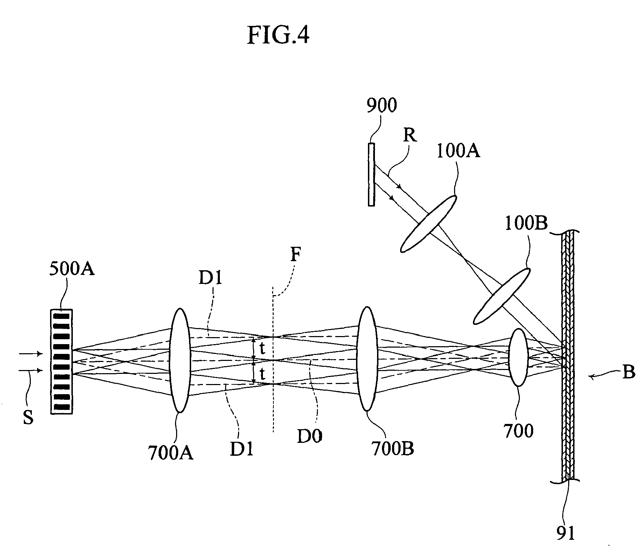

A conventional hologram recorder is disclosed in JP-A-2002-216359, for example. Hologram recorders of this kind have a basic configuration as shown in Fig. 4. Specifically, a laser beam which comes out of a laser beam source (not illustrated) is split into a recording beam S and a reference beam R. The recording beam S is then modulated by a spatial light modulator 500A into a form representing the information to be recorded, then passes through relay lenses 700A, 700B and then through an objective lens 700, before it reaches a recording layer 91 of a hologram recording medium B. On the other hand, the reference beam R is directed by a recording galvanometer mirror 900 and condenser lenses 100A, 100B to the hologram recording medium B, and interferes with the recording beam S in the recording layer 91 of the hologram recording medium B. As a result, a hologram is recorded in the recording layer 91 in the form of interference fringes caused by the recording beam S and the reference beam R.

The amount of data (record amount) recorded in such a hologram depends on the number of effective pixels in the spatial light modulator. The number of effective pixels is proportional to the size of overall pixel region if the pixel pitch is constant whereas the number of effective pixels is proportional to an inverse number of the pixel pitch if the size of overall pixel region is constant. Therefore, in order to increase the amount of data to be recorded, simply, the size of overall pixel region should be increased without changing the pixel pitch of the spatial light modulator or the pixel pitch should be decreased without changing the size of overall pixel region, so as to increase the number of effective pixels in the spatial light modulator.

However, as will be described specifically in the following paragraphs, there is a problem in the conventional hologram recorders in that design conditions for the optical system including e.g. an objective lens become increasingly stringent with the increase in the number of effective pixels of the spatial light modulator 500.

In the above-described optical system in Fig. 4, on the plane F (Fourier plane), where a Fourier image is formed between the relay lenses 700A and 700B, a 0-order diffraction D0 appears on the optical axis, and. ±1-order diffractions D1 appear at locations away from the optical axis by a distance t. As the distance t becomes smaller, so does the angle of field (i.e. aperture angle) of the objective lens 700, and it becomes possible in optical design to decrease the effective aperture of the objective lens 700.

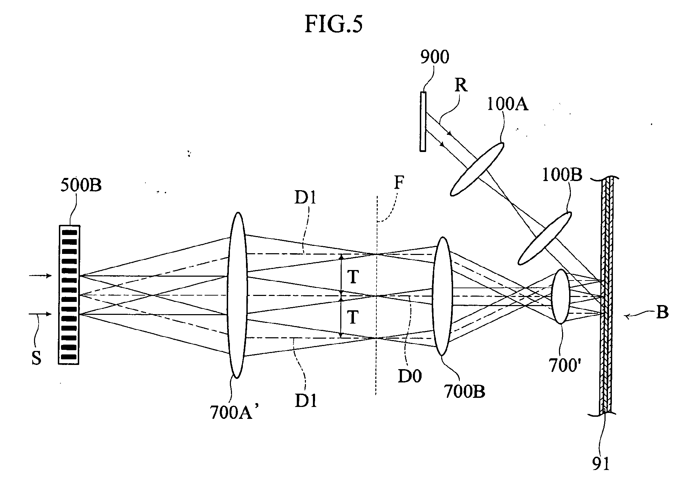

On the other hand, as shown in Fig. 5 for example, there can be a case where the size of entire pixel region is increased without changing the pixel pitch of the spatial light modulator 500B whereby the number of effective pixels with respect to the recording beam S is increased as compared to the case in Fig. 4. In this case, a relay lens 700A' which is closer to the spatial light modulator 500B must have a larger aperture and a longer focal distance. With such an arrangement, ±1-order diffractions D1 appear on the Fourier plane F, at locations away from the optical axis by a distance T. The distance T is greater than the distance t in Fig. 4, which means that the objective lens 700' must be given a larger effective aperture by optical design.

Though not illustrated in particular, there can be another case in which the pixel pitch is decreased without changing the size of the entire pixel region of the spatial light modulator, whereby the number of effective pixels with respect to the recording beam is increased as compared to the case in Fig. 4. In this case again, a result is an increased distance between the optical axis and ±1-order diffractions because the diffraction angle on the exiting surface of the spatial light modulator increases with the pixel pitch. This means that even if the pixel pitch is decreased, the objective lens effective aperture must be increased even more. In any case, the number of effective pixels in the spatial light modulator must be increased and the objective lens must have superior optical characteristics in order to further increase the amount of recording in a hologram.

Accordingly, it is desirable to provide a hologram recorder capable of increasing the amount of recording in a hologram easily, without relying upon superior optical characteristics of the optical system.

### SUMMARY OF THE INVENTION

A hologram recorder embodying the present invention, which records a hologram in a hologram recording medium by interference of a recording beam with a reference beam in the hologram recording medium, includes: a light source which outputs coherent light to be split into the recording beam and the reference beam; a spatial light modulator which modulates the recording beam into a form representing information to be recorded; and an objective lens which outputs the recording beam. The spatial light modulator has a light entering surface provided with a phase shift mask which allows the recording beam to pass through while partially shifting a phase of the recording beam passing through the mask.

According to a preferred embodiment, the phase shift mask includes first transparent pixels which simply allow the recording beam to pass through, and second transparent pixels which give the recording beam a phase difference n. Further, the first transparent pixels and the second transparent pixels are alternated with each other in an array.

According to another preferred embodiment, the hologram recorder further includes a relay lens provided between the spatial light modulator and the objective lens.

According to another preferred embodiment, the hologram recorder further includes an aperture provided in an optical path for propagation of a frequency which is half a Nyquist spatial frequency of the spatial light modulator, and this aperture limits an area on the hologram recording medium irradiated by the recording beam.

With the above arrangement, diffractions from the spatial light modulator will be as follows: Specifically, 0-order diffraction which would appear on the optical axis disappears due to the phase shift mask. Further, ±1-order diffractions appear at locations closer to the optical axis than in a case where there is no phase shift mask provided. In other words, the optical axis and ±1-order diffractions are closer to each other than in the convention. Therefore, according to an embodiment of the present invention, even if the number of effective pixels of the spatial light modulator is increased, there is no need for e.g. the objective lens effective aperture to be increased as much. Thus, it is possible to increase the amount of recording in a hologram easily, without relying upon improvement in optical characteristics of the optical system such as the objective lens.

Other characteristics and advantages of the present invention will become clearer from the following detailed description to be made with reference to the attached drawings.

### BRIEF DESCRIPTION OF THE DRAWINGS

Fig. 1 is an overall schematic of an embodiment of a hologram recorder according to the present invention.
Fig. 2 is a conceptual illustration of a phase shift mask and a spatial light modulator in Fig. 1.
Fig. 3 is a diagram for describing a function of the hologram recorder in Fig. 1.
Fig. 4 is a diagram for describing a conventional hologram recorder.
Fig. 5 is a diagram for describing a conventional hologram recorder.

### DETAILED DESCRIPTION OF THE PREFERRED EMBODIMENTS

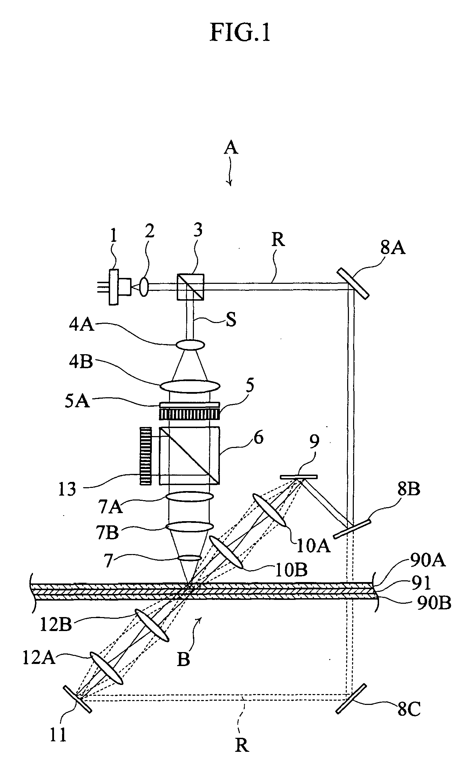

Hereinafter, a preferred embodiment of the present invention will be described specifically, with reference to the drawings. Figs. 1 through 3 show a hologram recorder as an embodiment of the present invention.

As shown in Fig. 1, a hologram recorder A according to the present embodiment includes a light source 1, a collimating lens 2, a first beam splitter 3, beam expanders 4A, 4B, a phase shift mask 5A, a spatial light modulator 5, a second beam splitter 6, relay lenses 7A, 7B, an objective lens 7, fixed mirrors 8A, 8B, 8C, a recording galvanometer mirror 9, recording condenser lenses 10A, 10B, a reproducing galvanometer mirror 11, reproducing condenser lenses 12A, 12B, and a photo detector 13. Other elements which are not illustrated include a rotation mechanism for rotating a hologram recording medium B as a rotating disc, and a carrying mechanism for moving the optical system such as the objective lens 7 radially of the hologram recording medium B. The hologram recording medium B used in the hologram recorder A includes two protective layers 90A, 90B and a recording layer 91 sandwiched therebetween. Beams can be applied to the recording layer 91 from both sides. As the recording beam S and the reference beam R interfere with each other, a hologram is recorded in the recording layer 91. When reproducing, a reference beam R is applied as indicated by broken lines, to the hologram recording medium B from the opposite side as was during the recording, and the beam from the hologram which interferes with the reference beam R travels to the objective lens 7 as a return beam.

The light source 1, which is provided by e.g. a semiconductor laser device, outputs a laser beam at the time of recording as well as reproducing. The beam has a relatively narrow band and serves as a highly interfering coherent light. The collimating lens 2 converts the laser beam from the light source 1 into a parallel light. The laser beam from the collimating lens 2 travels to the first beam splitter 3. The first beam splitter 3 splits the incoming laser beam into a recording beam S which travels to the spatial light modulator 5, and a reference beam R which travels through a different optical path to the recording and the reproducing galvanometer mirrors 9, 11. The beam expanders 4A, 4B, provided by combined lenses, expand the diameter of the recording beam S while introducing the recording beam S to the phase shift mask 5A and the spatial light modulator 5.

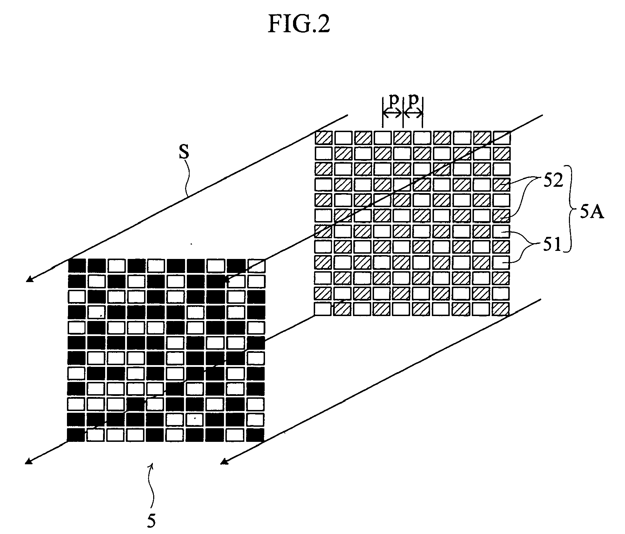

The phase shift mask 5A is provided on the light entering surface of the spatial light modulator 5. As shown in Fig. 2, the phase shift mask 5A has a dot matrix structure provided by two types of element which have different optical characteristics from each other; i.e. first transparent pixels 51 and second transparent pixels 52. The first transparent pixels 51 provide apertures which simply allow the recording beam S to pass through whereas the second transparent pixels 52 are made of a phase film which gives the recording beam S a phase difference n while allowing the recording beam S to pass through. These first transparent pixels 51 and the second transparent pixels 52 are alternated in vertical and horizontal directions, at a pixel pitch p of 10 through 20 µm approximately.

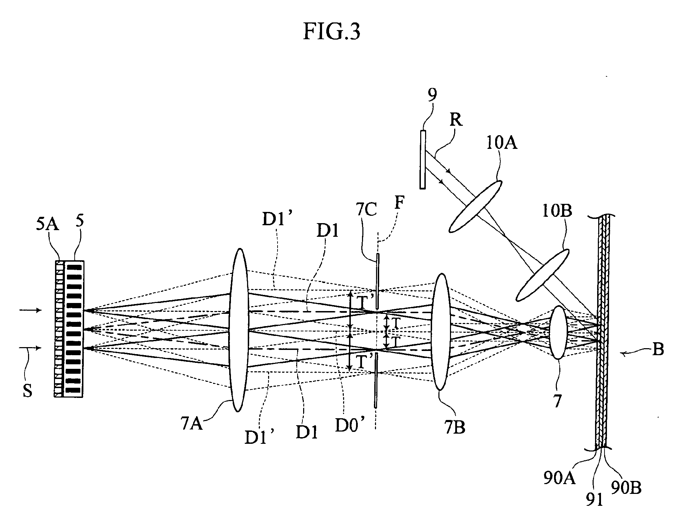

The spatial light modulator 5, provided by e.g. a liquid crystal display device, works at the time of recording, and modulates the incoming beam into a beam (recording beam S) which represents a two-dimensional pixel pattern. The pixel pattern made by the spatial light modulator 5 is varied in accordance with the information to be recorded (See Fig. 2). The recording beam S from the spatial light modulator 5 passes through the second beam splitter 6, travels to the relay lenses 7A, 7B and the objective lens 7, and finally reaches the hologram recording medium B, at which time, the recording beam S has a maximum spatial frequency to be transmitted by ±1-order diffractions D1 as shown in Fig. 3. The beam passes through the relay lenses 7A, 7B and the objective lens 7. An diaphragm 7C is provided on the Fourier plane F between the relay lenses 7A, 7B where the Fourier image is formed. The diaphragm 7C limits the 2-order and higher-order diffractions, thereby limiting the area on the hologram recording medium B irradiated by the recording beam S. Conventionally, such an diaphragm allows transmission up to the Nyquist spatial frequency of the spatial light modulator; however, the diaphragm 7C according to the present embodiment allows transmission of a spatial frequency which is a half of the Nyquist spatial frequency. Because of this arrangement, the area of the hologram recording medium B irradiated by the recording beam S is approximately a quarter of the conventional size. When reproducing, the spatial light modulator 5 is not operated so the recording beam S is not thrown onto the hologram recording medium B. Note that in the present embodiment, the relay lenses 7A, 7B and the objective lens 7 are disposed in such a way that the recording beam S enters the hologram recording medium B generally perpendicularly thereto (zero-degree angle of incidence).

When recording, on the other hand, the reference beam R from the first beam splitter 3 reflects on the fixed mirrors 8A, 8B and then travels to the recording galvanometer mirror 9. The recording galvanometer mirror 9 is capable of varying the angle of incidence and the angle of reflection of the reference beam R at the time of recording, and allows the reference beam R to travel to the hologram recording medium B. After the recording galvanometer mirror 9, the reference beam R passes through the condenser lenses 10A, 10B, and irradiates the hologram recording medium B. When recording, the reference beam R is applied so as to cross with the recording beam S on the recording layer 91 of the hologram recording medium B. In the present embodiment, the recording galvanometer mirror 9 varies the angle of incidence of the reference beam R to the hologram recording medium B, whereby multiplex recording is made for holograms which have different interference patterns depending upon the angle of incidence.

When reproducing, the reference beam R reflects on the fixed mirror 8C and then travels to the reproducing galvanometer mirror 11. The reproducing galvanometer mirror 11 is capable of varying the angle of incidence and the angle of reflection of the reference beam R at the time of reproducing, and allows the reference beam R to travel toward the hologram recording medium B from the opposite side as from the time of recording. After the reproducing galvanometer mirror 11, the reference beam R passes through the condenser lenses 12A, 12B, and then irradiates the hologram recording medium B. When reproducing, the reference beam R is applied so as to interfere with the recorded hologram on the recording layer 91 of the hologram recording medium B. In the present embodiment, reproducing galvanometer mirror 11 operates so that the reproducing reference beam R is applied as a conjugated beam which has a reversed direction from the time of recording but has the same angle of incidence as in recording. Thus, the return beam from the hologram has the same pixel pattern as did the recording beam S.

The photo detector 13, which is provided by a CCD area sensor or a CMOS area sensor works at the time of reproducing, to receive the return beam which comes back from the hologram recording medium B, through the objective lens 7 and the relay lenses 7A, 7B, and then to the second beam splitter 6. The photo detector 13 as described provides a beam reception signal that corresponds to the pixel pattern represented by the return beam, and based on this beam reception signal, information which corresponds to the pixel pattern made at the time of recording is reproduced.

Next, function of the hologram recording/reproducing apparatus A will be described.

As mentioned earlier, when recording a hologram in the hologram recording medium B, the recording beam S passes through the relay lenses 7A, 7B and the objective lens 7 as ±1-order diffractions D1 whereas 0-order diffraction disappears (See Fig. 3). This is due to optical characteristics of the phase shift mask 5A as will be described hereinafter.

As a comparative example, take a case where there is no phase shift mask provided. As indicated by broken lines in Fig. 3, 0-order diffraction D0' appears on the Fourier plane F, and ± 1-order diffractions D1' appear at locations away from the optical axis by a distance T', on the Fourier plane F. The distance T' can be theoretically expressed as T'=λ×f/p, where f represents the focal distance of the relay lens 7A, λ represents the wavelength of the recording beam S, and the pixel pitch of the spatial light modulator 5 is represented by p which is the same as of the phase shift mask 5A. Note that the inverse number of the pixel pitch p, i.e. 1/p represents the spatial frequency of the phase shift mask 5A.

On the other hand, according to so called phase shift method theory, provision of the phase shift mask 5A as in the present embodiment makes the distance T between ±1-order diffractions D1 and the optical axis smaller than the distance T' which is the distance when no phase shift mask is provided. The distance T is known to be dependent upon the pixel pitch p of the shift mask 5A, and to be T=λ×f/2p, theoretically. In other words, it appears every time the phase difference n becomes two times the pixel pitch p, i.e. 2p. Thus, the distance T is approximately a half of the distance T', and ±1-order diffractions D1 appear on the Fourier plane F, right in the middle between the optical axis and ±1-order diffractions D1' which is the diffractions appearing when there is no phase shift mask.

As described, since the distance T for ±1-order diffractions D1 is smaller than the case where there is no phase shift mask, the objective lens 7 can now have the following optical characteristics: Specifically, it is now possible to make its angle of field (aperture angle) and effective aperture as small as possible. This means that increase in the amount of recording in a hologram can be achieved by increasing the number of effective pixels of the spatial light modulator 5, but without the need for as much increase in the effective aperture of the objective lens 7. With this arrangement used in the present embodiment, the number of effective pixels is increased by increasing the size of the entire pixel region without changing the pixel pitch of the spatial light modulator 5, thereby increasing the amount of recording in a hologram, differing clearly from the convention in Fig. 4. On the other hand, the angle of field of the objective lens 7 is not very much increased over the convention, and therefore the effective aperture is appropriate. A note should be made here for a case in which the number of effective pixels is increased by decreasing the pixel pitch without changing the size of the entire pixel region of the spatial light modulator, thereby increasing the amount of recording in a hologram. In this case, the diffraction angle increases but the distance between ±1-order diffractions does not as much, due to the phase shift method theory. For this reason, it is also possible to decrease objective lens effective aperture as much as possible.

The recording beam S and the reference beam R which travel as described thus far interfere with each other at the recording layer 91, whereby a hologram is recorded in the recording layer 91. Upon recording, the recording galvanometer mirror 9 is operated to set the reference beam R to different angles of incidence, whereby multiplex recording is made for different interference fringe patterns according to the angle of incidence of the reference beam R.

The hologram being recorded as described, when reproducing the recorded information from the hologram recording medium B, the reproducing galvanometer mirror 11 is operated to set the reference beam R at the same angle of incidence as at the time of recording. Thus, the return beam from the hologram is received by the photo detector 13, and the information in the multiplex recording in the hologram is reproduced according to different angles of incidence.

Therefore, according to the hologram recorder A, increasing the number of effective pixels of the spatial light modulator 5 does not lead to a need for increasing the effective aperture of the objective lens 7 as much, and so it becomes possible to ease design conditions of the optical system, to render the objective lens 7 moderate optical characteristics, and based on this, to increase the amount of recording in a hologram easily.

The present invention is not limited to the embodiment described above.

For example, the embodiment uses a transparent hologram recording medium B, and for this reason the direction of the reference beam for recording is opposite to the direction of the reference beam for reproducing. However, when using a reflective hologram recording medium which has a reflection film, the direction of the reference beam for recording is the same as the direction of the reference beam for reproducing, and the reference beam is applied from the same side as is the recording beam.

## Claims

1. A hologram recorder for recording a hologram on a hologram recording medium by interference of a recording beam with a reference beam, comprising:
a light source for outputting coherent light to be split into the recording beam and the reference beam;
a spatial light modulator for modulating the recording beam into a form representing information to be recorded;
an objective lens for outputting the recording beam; and
a phase shift mask provided at a light entering surface of the spatial light modulator, the mask allowing the recording beam to pass through, while also partially shifting a phase of the recording beam passing through the mask.

2. The hologram recorder according to Claim 1, wherein the phase shift mask includes first transparent pixels for simply allowing the recording beam to pass through, and second transparent pixels for giving the recording beam a phase difference n, the first transparent pixels and the second transparent pixels being alternated with each other in an array.

3. The hologram recorder according to Claim 1 or 2, further comprising a relay lens provided between the spatial light modulator and the objective lens.

4. The hologram recorder according to Claim 1, 2 or 3, further comprising an aperture provided in an optical path for propagation of a frequency which is half a Nyquist spatial frequency of the spatial light modulator, the aperture limiting an area on the hologram recording medium irradiated by the recording beam.
